# EUROPÄISCHE PATENTSCHRIFT

(11) **EP 2 305 991 B1**
(45) Veröffentlichungstag und Bekanntmachung des Hinweises auf die Patenterteilung: **10.10.2012**
(21) Anmeldenummer: 10008745.1
(22) Anmeldetag: 23.08.2010
(51) Int. Cl.: F02M 25/07

(54) **Brennkraftmaschine mit einem Abgasturbolader und einem Abgasrückführsystem**
Combustion engine with an exhaust gas turbocharger and an exhaust gas return system
Moteur à combustion interne doté d'une turbosoufflante de gaz d'échappement et d'un système de refoulement des gaz d'échappement

(30) Priorität: 25.09.2009 DE 102009043085
(43) Veröffentlichungstag der Anmeldung: 06.04.2011
(73) Patentinhaber: Volkswagen Aktiengesellschaft, 38440 Wolfsburg (DE)
(72) Erfinder: Sprute, Jörg, 29399 Wahrenholz (DE); Stehr, Hartmut, 38518 Gifhorn (DE); Biener, Martin, 38173 Veltheim (DE)

(56) Entgegenhaltungen:
- EP-A1- 1 455 078
- EP-A1- 1 770 271
- DE-A1- 19 500 475
- DE-A1-102004 023 540
- DE-A1-102005 002 266
- DE-A1-102005 048 911
- DE-A1-102005 052 496
- DE-U1- 9 313 593
- FR-A1- 2 943 383
- FR-A3- 2 922 956

## Beschreibung

Die Erfindung betrifft eine Brennkraftmaschine mit einem Abgasturbolader und einem Abgasrückführsystem gemäß dem Oberbegriff des Patentanspruches 1.

Eine wirksame Methode zur Verringerung der Stickoxid- und Rußemissionen von Verbrennungsmotoren mit Abgasturbo-Aufladung ist der Einsatz einer Abgasrückführung (AGR), bei der das Abgas stromab einer Turbine eines Abgasturboladers bzw. stromab eines Dieselpartikelfilters (DPF) entnommen und stromauf eines Verdichters des Abgasturboladers der Ansaugluft zugeführt wird. Die Bemessung der gewünschten Abgasrückführmenge erfolgt in der Regel mittels eines AGR-Ventils, das in der AGR-Strecke angeordnet ist. Zusätzlich oder ersatzweise muss zur Erzeugung des für den Abgastransport benötigten Druckgefälles entweder der Abgasstaudruck mittels einer Stauklappe nach der Entnahmestelle angehoben oder der Ansaugunterdruck vor Verdichter mittels einer Drosselklappe abgesenkt werden. Zusätzlich dient ein AGR-Kühler vor dem Verdichter zum Schutz desselben vor zu hohen Bauteiltemperaturen.

Da bei einem Motor mit AGR in vielen Betriebspunkten entweder der Abgas- oder der Ansaugstrom gedrosselt werden muss, entsteht ein Verbrauchsnachteil aufgrund des beeinträchtigten Ladungswechsels. Dieser Verbrauchsnachteil ist umso größer, je höher der Strömungswiderstand innerhalb der Abgasrückführstrecke (AGR-Strecke) ist. Bei einer herkömmlichen Brennkraftmaschine, die z.B. mit einem Niederdruck- und zusätzlich mit einem Hochdruck-AGR-System ausgestattet ist, sind die Druckverluste innerhalb der Niederdruck-AGR-Strecke oft noch unerwünscht hoch. Hierfür sind die nachfolgend genannten Faktoren verantwortlich. Die Anordnung und der Durchmesser der Entnahmestelle für ND-AGR stromabwärts des DPF, vergleichsweise dünne und oft gekrümmt verlaufende AGR-Leitungen, der meist U-förmig durchströmte AGR-Kühler mit internen und externen Umlenkungen, das AGR-Ventil mit seinen Umlenkungen und der AGR-Einleitstutzen am Verdichter. Diese bekannten, hohen Druckverluste können dazu führen, dass zur Einregelung des notwendigen Druckgefälles eine vergleichsweise aufwendige, elektrisch angesteuerte Abgasklappe eingesetzt werden muss. Dabei kommt eine alternative Regelung mittels einer kostengünstigeren Drosselklappe vor Verdichter oft nicht in Frage, da der Druck vor dem Verdichter so stark abgesenkt werden müsste, dass es zum Verdichterpumpen oder zum Ölaustritt aus dem ATL in die Ansaugluft käme.

Eine gattungsgemäße Brennkraftmaschine ist aus der EP 1 455 078 B1 bekannt. Deren Figuren zeigen gemäß Absatz [0023] ohne Bezug zu realen Geometrien verschiedenartige Strömungswege für Niederdruck- und Hochdruckabgasrückführstrecken, alternativ mit und ohne Kühlung bzw. mit und ohne Druckregelventil.

Aus der DE 10 2005 052 496 A1 ist bereits eine einen geringeren Druckverlust bewirkende Anbindung des zum Verdichter des Abgasturboladers rückgeführten Abgases bekannt, wobei eine zweite Abgasrückführleitung eine Abzweigung aufweist, die bei einem Betriebszustand mit mittlerer Last über ein Umschaltventil in der zweiten Abgasrückführleitung mit der Hochdruckseite des Verdichters verbunden ist. Die hierzu gehörige Anordnung ist rein schematisch gezeigt.

Weiterhin ist es für eine Anordnung zur Rückführung und Kühlung von Abgas, welche das Gesamtsystem vereinfachen soll und die Herstellungskosten senken und den Wirkungsgrad des Systems erhöhen soll, aus der DE 10 2005 048 911 A1 bekannt, eine bauliche Integration von Abgasrückventil, einer Abgasrückführstelle und eines Ladeluftdrosselorganes in die Ansaugleitung des Motors vorzusehen, wodurch der Bauraum reduziert wird, die thermische Belastung verringert wird und das dynamische Verhalten des Gesamtsystems verbessert werden soll. Schließlich soll bei dieser Lösung durch die Integrationslösung der Vorteil erreicht werden, dass die Gesamtlänge der Leitungen im Abgasrückführstrang reduziert ist, was zu einer Verringerung der Druckverluste und somit zu einer Vergrößerung der maximalen möglichen AGR-Rate führen soll. Auch diese technische Lösung wird in insgesamt 7 Figuren rein schematisch dargestellt.

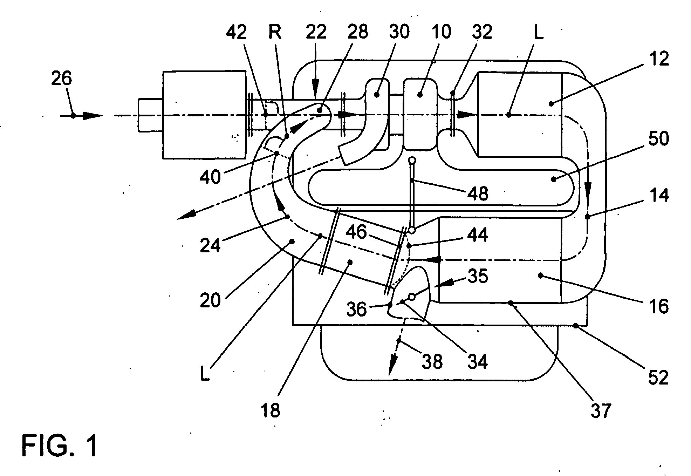

Ein bezüglich Kosten, Funktion, Gewicht und Platzbedarf verbessertes Abgasrückführsystem für eine Brennkraftmaschine ist darüber hinaus aus der DE 10 2005 002 266 A1 bekannt. Hierbei strömt das von der Abgasturbine des Turboladers abströmende Abgas an einem oberen Ende seitlich in eine beispielsweise als Katalysator und/oder Filter ausgebildete Abgasreinigungskomponente ein, wird in dieser zwangsweise um ca. 70 Grad abgelenkt und durchströmt diese bis zu einem Abströmende, wo das Abgas erneut um ca. 60 Grad abgelenkt in einen Klappenmechanismus austritt. Dieser lenkt den rückzuführenden Abgasstrom um ca. 90 Grad nach oben ab, vergleiche dortige Fig. 1, um diesen Abgasstrom einer Abgasrückführleitung mit vergleichsweise geringem Querschnitt zuzuführen. Diese Leitung knickt unter einem weiteren Winkel von ca. 45 Grad von dem Klappenmechanismus ab, um im weiteren Verlauf um ca. 90 Grad abgewinkelt in einen Abgaskühler einzuströmen. Abströmseitig dieses Kühlers wird erneut 2 mal unter etwa 45 Grad umgelenkt und stromauf des Verdichters das Abgas rückgeführt. Insgesamt wird ein Ablenkwinkel von ca. 460 Grad erreicht, wobei insbesondere durch die schräge Zu- und Abströmung an der Abgasreinigungskomponente starke Druckverluste auftreten, welche ebenfalls durch die sehr scharfe Umlenkung aus dem Klappenmodul in die Abgasrückführleitung verstärkt wird.

Ein Absperr- oder Drosselventil für eine Abgasleitung einer Brennkraftmaschine zum Erzeugen eines Staudruckes ist aus DE 195 00 475 C2 bekannt, wobei diese Drehklappe asymmetrisch gelagert ist, so dass eine Teilfläche größer als die andere Teilfläche ist und der Staudruck daher diese Klappe in eine Öffnungsstellung bewegt, wobei diese Öffnungsstellung durch im Gehäuse vorgesehene Anschlagkanten begrenzt ist.

Eine Brennkraftmaschine mit Abgasturbolader, einer Niederdruck-Abgasrückführung und einem Dreiwegeventil vor einem Wärmetauscher ist aus FR 2 922 956 bekannt. Stromab der Turbine ist ein Abgasbehandlungssystem angeordnet, das als ein Partikelfilter oder ein Katalysator ausgeführt sein kann. Die relative Lage des Abgasbehandlungssystems zur Brennkraftmaschine ist nicht zeichnerisch dargestellt. Die Tatsache, dass in der beschriebenen Anordnung nur ein Ventil erforderlich ist, vereinfacht die Montage und den Bauraum der Verbindung zwischen dem Wärmetauscher und der Gemischzufuhrleitung.

Der Erfindung liegt die Aufgabe zugrunde, eine gattungsgemäße Brennkraftmaschine mit einem Abgasturbolader und einem Abgasrückführsystem zu schaffen, bei welcher die Abgasrückführung, Reinigung, Bemessung und Kühlung des Abgases bei einem insgesamt minimalen Druckverlust und geringen Einzelkosten verbessert ist.

Diese Aufgabe wird erfindungsgemäß durch die im Anspruch 1 angegebenen Merkmale gelöst. Vorteilhafte Ausgestaltungen der Erfindung sind in den abhängigen Ansprüchen angegebenen.

Dazu ist bei einer Brennkraftmaschine der oben genannten Art erfindungsgemäß folgendes vorgesehen,
- eine seitlich neben einer Längsseite der Brennkraftmaschine verlaufende Ebene, welche definiert ist durch die Achse eines Abgasturboladers und einen hierzu
- beabstandeten Punkt, welcher in der vom rückgeführten Abgas durchströmten Eintrittsfläche des AGR-Kühlers liegt,
- und eine weitestgehend umlenkungsfreie und gradlinige Durchströmung der Komponenten des Abgasbehandtungssystemes,
- und ein AGR-Kühler, welcher unmittelbar stromab einer Abzweigung für das nicht zurückgeführte Abgas vom Abgasweg angeordnet ist, wobei sich die Abgasrückführleitung bogenförmig derart vom AGR-Kühler zur Luftzuführung erstreckt, dass das rückgeführte Abgas in einer zur Luftzuführung gleichgerichteten Strömungsrichtung zugeführt wird.

Dies hat den Vorteil, dass eine druckverlustarme Führung der Abgase sowohl in dem Teil des Abgasweges, welcher den gesamten Abgasvolumenstrom führt sowie auch in dem Teil des Abgasweges, welcher nur den Volumenstrom des rückgeführten Abgases enthält, möglich ist. Grundgedanke hierbei ist eine klar gegliederte Anordnung von Komponenten und Bauteilen des Systems entlang bzw. in einer seitlich neben der Brennkraftmaschine aufgespannten Ebene. Diese Ebene kann sowohl seitlich neben einer Reihen-Brennkraftmaschine wie auch neben der oder den Zylinderreihen einer V-förmigen Brennkraftmaschine liegend angeordnet sein.

Erfindungsgemäß ist eine Vielzahl von relativen Lagen dieser Ebene möglich, wobei wesentlich ist, dass die Rotationsachse des Abgasturboladers in dieser Ebene liegt und diese Ebene die Eintrittsfläche für rückgeführtes Abgas des AGR-Kühlers in irgendeinem ihrer Punkte schneidet. In Verbindung mit der weitestgehend umlenkungsfreien und in sich geradlinigen Durchströmung einzelner Komponenten des Abgasbehandlungssystems, wie z.B. eines Partikelfilters und/oder eines Katalysators ist es möglich, die sonst üblichen, zum Teil starken Umlenkungen in diesen Komponenten zu vermeiden. Unmittelbar stromab der Abzweigung , an welcher der nicht rückgeführte Abgasstrom von dem gesamten Volumenstrom getrennt wird, wird der rückgeführte Abgasstrom dem Abgaskühler zugeführt, welcher ebenfalls geradlinig durchströmt wird. Das soweit behandelte, rückzuführende und abgekühlte Abgas wird dann über die druckverlustarm bogenförmig ausgeführte Abgasrückführleitung von diesem Kühler der Luftzuführung in nahezu paralleler bzw. gleichgerichteter Strömungsrichtung zugeführt. Im Sinne vorliegender Erfindung bedeutet gleichgerichtete Strömungsrichtung keineswegs, dass diese vollständig parallel zur Richtung der zugeführten Luft verläuft, vielmehr kann diese auch unter einem gewissen Winkel eingeleitet werden, jedoch keinesfalls entgegen der Luftzuströmung bzw. senkrecht zu dieser. Beide Maßnahmen hätten einen zusätzlichen Druckverlust zur Folge.

Die Komponente oder die Komponenten zur Verringerung der Schadstoff-Emissionen sind bevorzugt so angeordnet, dass sie ebenfalls in der genannten Ebene liegen, idealer Weise liegt ihre Längsmittelachse in dieser Ebene. Die Ebene kann diese Komponenten schneiden oder auch tangieren.

Dies hat den Vorteil, dass ein niedriger Bauraumbedarf bei gleichzeitig geringem Druckverlust über diese Niederdruck (ND)-AGR-Strecke und damit eine Reduzierung des Kraftstoffverbrauchs sowie einer CO₂-Emission der Brennkraftmaschine erzielt wird.

Eine weitere Reduktion des Bauraumbedarfs mit zusätzlich verbesserter thermischer Anbindung zum Beispiel eines Katalysators erzielt man dadurch, dass dieser direkt an der Turbine angeflanscht ist und daher vorzugsweise koaxial zur Achse des ATL angeordnet ist

Eine weitere Reduzierung der Druckverluste in der ND-AGR-Strecke erzielt man dadurch, dass eine Winkeldifferenz der ein- und ausströmenden Gase zu einer Durchströmungsrichtung des jeweiligen Bauteils kleiner oder gleich 90° ist, vorzugsweise 0° bis 45° Grad, insbesondere 0° Grad.

Eine weitere Reduzierung des Bauraumbedarfs erzielt man dadurch, dass ein Überströmgehäuse vorgesehen ist, welches den Katalysator mit dem Partikelfilter derart verbindet, dass ein Strömungsweg durch den Katalysator und ein Strömungsweg durch den Partikelfilter im Wesentlichen parallel zueinander angeordnet sind. Dabei ist die Strömungsrichtung in diesen beiden Komponenten bezüglich der Ebene entgegen gerichtet.

Einen besonders guten Übergang von thermischer Energie von einem Abgaskrümmer der Brennkraftmaschine zu Katalysator und Partikelfilter erzielt man dadurch, dass der Katalysator und der Partikelfilter derart angeordnet und ausgebildet sind, dass zwischen diesen ein Abschnitt eines Abgaskrümmers der Brennkraftmaschine angeordnet ist.

Eine Wärmeerhaltung im Katalysator und dem Partikelfilter sowie einen Schutz von angrenzenden Bauteilen erzielt man dadurch, dass ein Wärmeabschirmelement derart angeordnet und ausgebildet ist, dass dieses eine Abstrahlung von thermischer Energie von dem Abgaskrümmer, dem Katalysator und dem Partikelfilter behindert.

Eine weitere Reduktion von Druckverlusten erzielt man dadurch, dass der AGR-Kühler derart ausgebildet ist, dass dieser entlang seiner Längsachse durchströmt ist.

Eine Vereinfachung der Montage und eine Vermeidung von kostspieligen Leitungen erzielt man dadurch, dass der AGR-Kühler direkt am Partikelfilter angeflanscht ist.

Vorzugsweise ist es dabei vorgesehen, dass der Partikelfilter in einem Gehäuse angeordnet ist und die Abzweigung Teil dieses Gehäuses ist und der AGR-Kühler direkt an dieses Gehäuse angeflanscht ist.

Eine zusätzliche Reinigung des zurückgeführten Abgases mit entsprechendem Schutz von in der ND-AGR-Strecke angeordneten Bauteilen erzielt man dadurch, dass in der ND-AGR-Strecke zusätzlich ein AGR-Filter vorgesehen ist. Dieses AGR-Filter ist beispielsweise als Gewebe, Geflecht oder Sieb ausgebildet. Zweckmäßigerweise ist das AGR-Filter kalottenförmig oder plan ausgebildet.

Einen besonders geringen Bauraumbedarf erzielt man dadurch, dass das AGR-Filter am Flansch zwischen Partikelfilter und AGR-Kühler angeordnet ist.

Zum Beeinflussen einer Menge des rückgeführten Abgases kann zwischen dem AGR-Kühler und der Einleitstelle ein AGR-Ventil in der ND-AGR-Strecke angeordnet sein.

Eine besonders einfache und kostengünstige Anordnung erzielt man dadurch, dass das AGR-Ventil als Drosselklappe ausgebildet ist.

Zum Abführen von nicht rückgeführtem Abgas zweigt von dem Partikelfilter bzw. einem diesen aufnehmenden Gehäuse eine zusätzliche Abgasleitung ab, wobei in dieser Abgasleitung eine Abgasstauklappe angeordnet ist.

Einen einfachen Aufbau mit geringem Bauraumbedarf erzielt man dadurch, dass die Abgasstauklappe direkt an den Partikelfilter angeflanscht oder in diesen integriert ist.

Eine weitere Vereinfachung der Anordnung erzielt man dadurch, dass die Abgasstauklappe als federbetätigte Klappe ausgebildet ist.

Eine weitere Vereinfachung der Anordnung erzielt man dadurch, dass ein gemeinsamer Steller vorgesehen ist, welcher sowohl das AGR-Ventil als auch die Abgasstauklappe und/oder eine Ansaug-Drosselklappe betätigt.

Eine besonders kompakte Anordnung mit vereinfachter Montage erzielt man dadurch, dass das AGR-Ventil, die Einleitstelle und die Ansaug-Drosselklappe in einem gemeinsamen Gehäuse angeordnet sind.

Zur Aufnahme von Wärmedehnungen sind zwischen dem Katalysator und der Turbine, zwischen dem Katalysator und dem Partikelfilter und/oder zwischen dem Partikelfilter und der Einleitstelle und/oder zwischen dem Überströmgehäuse und den angrenzenden Komponenten Schiebesitze ausgebildet.

Eine besonders einfache Montage erzielt man dadurch, dass der AGR-Kühler mittels eines Bajonett-Verschlusses mit dem Partikelfilter verbunden ist.

Insgesamt ist festzustellen, dass die erfindungsgemäße Ausgestaltung eine hohe Bemessung einer Abgasrückführrate ermöglicht. Bei modernen Abgasrückführkonzepten werden Abgasrückführraten von 60 Prozent und höher verlangt. Bei Abgasrückführraten höher als 50 Prozent kann also davon gesprochen werden, dass der rückgeführte Abgasstrom der dominante Strom an der Einleitstelle im Luftansaugweg ist. Es kann also vielmehr davon gesprochen werden, dass dem rückgeführten Abgasstrom auch Frischluft zugeführt wird. Ebenso ist bei Abgasrückführraten von über 50 Prozent der in der Abzweigung abgezweigte Rückführstrom höher bemessen als der dann noch verbleibende, der restlichen Abgasanlage zugeführte Abgasstrom.

Die Komponente zur Verringerung der Schadstoffemissionen im Abgasbehandlungssystem ist bevorzugt ein Filter, insbesondere ein Partikelfilter für eine Dieselbrennkraftmaschine, wobei dieser Partikelfilter mit Hilfe des Überströmgehäuses an den die Turbine verlassenden Abgasstrom angekoppelt ist. Bei Bedarf kann zwischen Überströmgehäuse und Turbine ein Katalysator angeordnet sein.

Die Erfindung wird im Folgenden anhand der Zeichnung näher erläutert. Diese zeigt in
- Fig. 1: eine bevorzugte Ausführungsform einer erfindungsgemäßen Niederdruck- Abgasrückführungs-Strecke in Seitenansicht und in
- Fig. 2: eine bevorzugte Ausführungsform einer selbsttätig arbeitenden Abgasstauklappe in teilweise aufgeschnittener Seitenansicht und in
- Fig. 3: die Abgasstauklappe gemäß Fig. 2 im Querschnitt und in
- Fig. 4: eine Seitenansicht zu Fig. 1

Die in Fig. 1 dargestellte, bevorzugte Ausführungsform einer erfindungsgemäßen Niederdruck-Abgasrückführungs-Strecke (ND-AGR-Strecke) für eine ansonsten nicht näher dargestellte Brennkraftmaschine zum Rückführen von Abgas (Abgasrückführung - AGR) in einen Frischluft- bzw. Verbrennungsluftmassenstrom umfasst eine Turbine 10 eines Abgasturboladers, einen Katalysator 12, ein Überströmgehäuse 14, einen Partikelfilter 16, beispielsweise in Form eines Dieselpartikelfilters, einen AGR-Kühler 18, eine AGR-Leitung 20 und eine Einleitstelle 22 zum Einleiten von rückgeführtem Abgas 24 in einen Frischluftstrom 26 mit einem AGR-Einleitungsstutzen 28°.

Weiterhin ist in Fig. 1 dargestellt ein Verdichter 30 des Abgasturboladers, ein Flansch 32 zwischen Turbine 10 und Katalysator 12, eine Abgasstauklappe 34 in einem abzweigenden Abgasrohr 36, welches zum Abführen von nicht rückgeführtem Abgas 38 dient, ein AGR-Ventil 40 in Form einer Drosselklappe, eine Ansaugdrosselklappe 42, ein AGR-Filter 44 in Form eines kalottenförmigen Gitters, einen Flansch 46 zwischen dem Partikelfilter 16 und dem AGR-Kühler 18, eine Stütze 48 für den Abgasturbolader und einen Abgaskrümmer 50, der als Modul einstückig mit einem Turbinengehäuse der Turbinen 10 ausgebildet ist, und ein Motorgehäuse 52 der Brennkraftmaschine. Ein den Partikelfilter 16 aufnehmendes Gehäuses 37 weist eine integrierte Abzweigung 35 auf, an welche das Abgasrohr 36 angeschlossen ist. Das AGR-Filter 44 ist am Flansch 46 konzentrisch zu diesem angeordnet. Die stromabwärts in der Abgasanlage angeordnete Abgasstauklappe 34 dient zum Einstellen eines Abgasstaudruckes und ist optional in den Partikelfilter 16 integriert bzw. an diesen direkt angeflanscht. Der Niederdruck-AGR-Kühler 18 ist längs durchströmt und leicht geneigt, damit ggf. Kondensat abläuft und eine Entlüftung sicher gestellt ist. Der AGR-Kühler 18 ist ohne weiteres Leitungsstück direkt am Partikelfilter 16 montiert. Die AGR-Leitung 20 ist direkt mit einem Austrittstrichter des AGR-Kühlers 18 verbunden und ist optional aus einem Kunststoff gefertigt.

Ein primäres Ziel der Erfindung besteht darin, den Strömungswiderstand der gesamten Gas-Strecke vom Turbinenaustritt bis zum Verdichtereintritt auf ein absolutes Minimum zu verringern. Da bei gängigen Abgasturboladern der Verdichtereintritt koaxial und gleich gerichtet mit dem Turbinenaustritt angeordnet ist, wird das zurück zu führende Abgas 24 in einem geschlossenen Kreislauf, wie durch eine strichpunktierte Linie L in Fig. 1 angedeutet geführt.

Da jede Umlenkung einen unerwünschten Widerstand erzeugt, ist es das Ziel der Erfindung, die Summe aller Umlenkungen nicht viel größer als 360° werden zu lassen. Hierzu sind alle durchströmten Komponenten, die den Katalysator 12, den Partikelfilter 16, den EGR-Filter 44, den EGR-Kühler 18, das Überströmgehäuse 14 und das EGR-Ventil 40 umfassen, im Wesentlichen kreisförmig zueinander angeordnet. Die Winkeldifferenzen zwischen den Strömungsrichtungen der ein- und ausströmenden Gase zu der Durchströmungsrichtung des jeweiligen zuvor genannten Bauteils betragen nicht mehr als jeweils 90° und die Ablenkungen erfolgen alle in derselben Richtung, beispielsweise im Uhrzeigersinn, wie in Fig. 1 dargestellt.

Der motornahe Katalysator 12 ist koaxial zum Turbinenrad angeordnet und direkt am Turboladergehäuse bzw. an der Turbine 10 befestigt. Dies bietet darüber hinaus weitere Vorteile. Das Anspringverhalten des Katalysators ist optimal, da nahezu keine Wärme nach dem Turbolader verloren geht, und die Anströmung des Katalysators ist sehr gleich verteilt. Außerdem lässt sich ein kostengünstiger Katalysator mit kreisförmigem Querschnitt verwenden.

Der Katalysator 12 ist mittels des strömungsoptimierten Überströmgehäuses 14 direkt mit dem Partikelfilter 16 (DPF) verbunden, der annähernd parallel zum Katalysator 12 angeordnet ist. Auch der Partikelfilter 16 ist wahlweise aus Kostengründen mit einem kreisförmigen Querschnitt ausgebildet.

Die Einheit aus Katalysator 12 und Partikelfilter 16 umschließt zusätzlich mindestens einen Abschnitt des Abgaskrümmers 50, so dass Katalysator 12 und Partikelfilter 16 vom Abgaskrümmers 50 mit thermischer Energie versorgt werden. Diese Baueinheit wird optional durch ein gemeinsames Wärmeabschirmelement isoliert. Dies erhält gleichzeitig die gewünschte Wärme bzw. thermische Energie in den Bauteilen. Katalysator 12 und Partikelfilter 16 und schützt angrenzende Fahrzeug- und Motorbauteile vor Überhitzung.

Der AGR-Kühler 18 ist zur Verringerung des Strömungswiderstandes ohne innere Umlenkungen längs durchströmt und zur Vereinfachung der Montage und zur Vermeidung kostspieliger Leitungen direkt an einen Austrittstrichter des Partikelfilters 16 angebaut. Der Staudruck (die kinetische Energie) der aus dem Partikelfilter 16 ausströmenden Gase reduziert zusätzlich die benötigte Druckdifferenz. Der AGR-Kühler 18 kann bei einer Wasserkühlung unter anderem zur Entlüftung des Wasserraumes leicht geneigt angeordnet sein. Der Querschnitt des AGR-Kühlers 18 ist bevorzugt aus Kostengründen kreisförmig ausgebildet.

Der AGR-Filter 44 dient zum Fernhalten von Partikeln aus dem Partikelfilter 16 vom Verdichter 30 und vom Motor. Der AGR-Filter 44 ist beispielsweise als kalottenförmiges oder kegeliges oder planes Gewebe oder Geflecht oder Sieb, direkt in die Verbindungsstelle (Flansch) zwischen Partikelfilter 16 bzw. Gehäuse 37 und AGR-Kühler 18 eingelegt und gehalten. Zur Verringerung des Strömungswiderstandes weist der idealerweise kreisrunde Flansch 46 einen möglichst großen Durchmesser auf.

Die AGR-Leitung 20 stromabwärts des AGR-Kühlers 18 ist aus Kostengründen beispielsweise aus einem Kunststoff gefertigt. Die AGR-Leitung 20 weist einen harmonischen Querschnittsverlauf und einen harmonischen, strömungsoptimierten Krümmungsverlauf auf.

Das AGR-Ventil 40 ist zumindest im geöffneten Zustand längs durchströmt und weist einen minimalen Strömungswiderstand auf. Bevorzugt ist das AGR-Ventil 40 als Drosselklappe ausgebildet und ggf. aus einem Kunststoff gefertigt und optional in die AGR-Leitung 20 oder den Einleitstutzen 28 integriert.

Der Einleitstutzen 28 ist optional ebenfalls aus einem Kunststoff hergestellt und primär auf einen minimalen Strömungswiderstand optimiert. Einleitstutzen 28, Ansaug-Drosselklappe 42 (soweit erforderlich) und AGR-Ventil 40 sind bevorzugt in einem gemeinsamen Gehäuse (beispielsweise aus Kunststoff) angeordnet. Drosselklappe 42 und AGR-Ventil 40 werden optional von einem gemeinsamen Steller betätigt, so dass beispielsweise zunächst das AGR-Ventil 40 voll geöffnet wird, und danach zusätzlich die Ansaug-Drosselklappe 42 geschlossen wird. Die Abgasstauklappe 34 ist, sofern noch erforderlich, direkt im Austrittstrichter des Partikelfilters 16 integriert oder direkt an diesen angeflanscht. Hierdurch ist es möglich, eine selbsttätige (federbetätigte) Klappe anstatt einer elektrischen Klappe einzusetzen.

Die Turboladerstütze 48 ist bevorzugt motorseitig zusammen mit dem Partikelfilter 16 entweder an dem Zwischenflansch 46 oder an einem Butzen im Partikelfilter 16 verschraubt. Falls innerhalb der Baueinheit aus Katalysator 12 und Partikelfilter 16 Wärmedehnungen aufgenommen werden müssen, sind Schiebesitze zwischen jeweils Katalysator 12 und Turbine 10, Katalysator 12 und Überströmgehäuse 14, Überströmgehäuse 14 und Partikelfilter 16 oder Partikelfilter 16 und Einleitstelle 22 vorgesehen. Der AGR-Kühler 18 ist beispielsweise mittels eines Bajonett-Verschlusses am Zwischenflansch 46 bzw. am Ausgangstrichter des Partikelfilter 16 montiert.

Durch die erfindungsgemäße für ein ND-AGR-System optimierte Anordnung und Ausführung aller beteiligten Bauteile wird der Druckverlust in der ND-AGR-Strecke soweit verringert, dass der Kraftstoffverbrauch des Motors nicht höher ist als bei einem leistungsgleichen Motor mit Hochdruck-AGR-System und es kann auf eine elektrische Regelklappe im Abgasstrang sowie auf ein Hochdruck-AGR-System verzichtet werden.

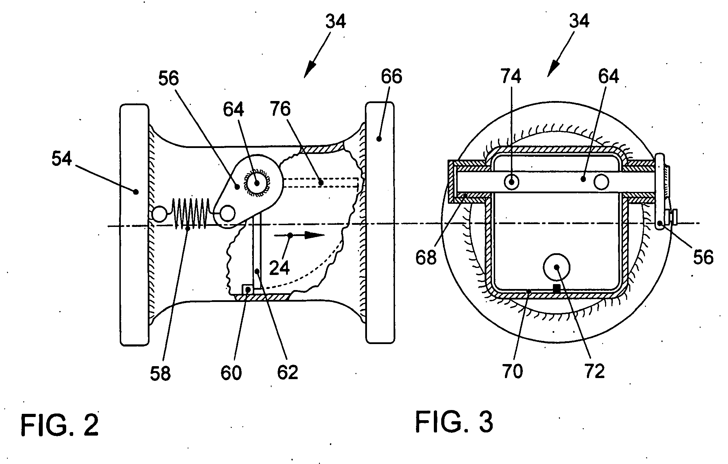

Fig. 2 und 3 zeigen eine beispielhafte Ausführungsform einer Abgasstauklappe 34 in Form einer selbsttätigen (federbetätigten) Klappe. Die in den Fig. 2 und 3 dargestellte, selbsttätige (federbetätigte) Abgasstauklappe 34 umfasst einen Eintrittsflansch 54, einen Hebel 56, eine Rückstellfeder 58, einen Anschlag 60, eine Stauklappe 62, die in den Fig. 2 und 3 in geschlossener Stellung dargestellt ist, eine Klappenwelle 64, einen Austrittsflansch 66, eine Lagerung 68, einen Spalt 70, eine Kalibrierbohrung 72 und eine Befestigung 74 der Abgasstauklappe 34 an der Klappenwelle 64, wobei diese Befestigung 74 beispielsweise als Niete, Schraube, Klemme oder Schweißnaht ausgebildet ist. Mit 76 ist eine Stellung "voll geöffnet" der Abgasstauklappe 34 bezeichnet. Die Rückstellfeder 58 ist in der dargestellten Ausführungsform als Schraubenfeder ausgebildet, diese kann jedoch auch als Spiralfeder, Drehfeder oder Torsionsfeder ausgebildet sein.

Die Abgasrückführrate wird mit dem in der Fig. 2 und 3 dargestellten AGR-Ventil 40 und der selbsttätig arbeitenden Klappe 62 gemäß Fig. 2 und 3 geregelt. Die Stauklappe 62 gemäß Fig. 2 und 3 weist eine Abgasführung mit einem im Wesentlichen runden, ovalen oder rechteckigem Querschnitt auf, in dem die Abgasstauklappe 62 exzentrisch gelagert ist. Bei stehendem Motor bzw. ohne oder nur geringem durch den Querschnitt strömendem Abgas 24 bewirkt die Rückstellfeder 58, die beispielsweise als Drehfeder oder Zugfeder ausgebildet ist, ein Schließen der Abgasstauklappe 62, indem diese gegen den Anschlag 60 gezogen oder gedrückt wird. In diesem Zustand kann Abgas 24 nur durch den Spalt 70 zwischen Abgasstauklappe 62 und Gehäuse strömen. Diese "Leckrate" lässt sich beispielsweise mittels der Kalibrierbohrung 72 in der Abgasstauklappe 62einstellen. Bei laufendem Motor wird die Abgasstauklappe 62 durch den Staudruck des Abgases 24 je nach Abgasmassenstrom mehr oder weniger gegen die Federkraft in Richtung der Stellung "voll geöffnet" 76 geöffnet. In Betriebszuständen mit hoher Motorleistung, d.h. mit hohem Abgasmassenstrom, ist die Abgasstauklappe 62 möglichst weit geöffnet, um einen möglichst geringen Abgasgegendruck zu erhalten, da der Abgasgegendruck den Verbrauch des Motors erhöht. Eine Kennlinie des Staudruckes über dem Abgasmassenstrom lässt sich in weiten Grenzen durch die Kinematik (Exzentrizität der Klappenwelle 64, Winkel des Hebels 56 zur Klappenwelle 64, Lage der Federaufhängung), die Federkennlinie und die Geometrie (Klappe 62, Kalibrierbohrung 72 etc.) beeinflussen bzw. einstellen. Das AGR-Ventil 40 ist entweder als separates Bauteil in den Abgasweg beispielsweise mittels Flanschen eingebaut oder mit V-Bond-Schellen befestigt. Alternativ ist das AGR-Ventil 40 in vorhandene Bauteile, wie den Partikelfilter 16 oder in die Einleitstelle 22 integriert.

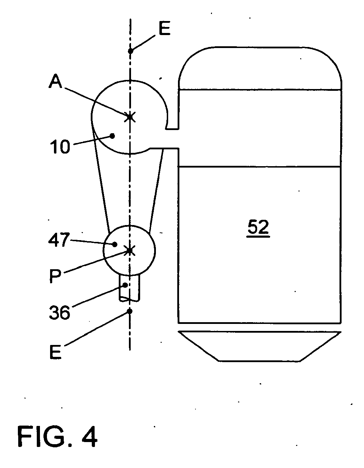

Wie in Figur 4 verdeutlicht spannt die Achse A, welches die Rotationsachse des Abgasturboladers ist und ein betiebiger Punkt P, welcher ein möglicher Punkt der Eintrittsfläche 47 ist, eine seitlich neben einer Längsseite der Brennkraftmaschine verlaufende Ebene E auf. Je nach baulichen Gegebenheiten an der Brennkraftmaschine bzw. auch bedingt durch deren Einbausituation kann der Punkt P idealer Weise der Mittelpunkt der Eintrittsfläche 47 sein, jedoch kann dieser auch beispielsweise auf dessen Peripherie liegen, so dass die Ebene E den AGR-Kühler lediglich tangiert. Die zuvor erwähnten, weiteren Komponenten Katalysator 12 und Partikelfilter 16 werden bevorzugt ebenfalls von der Ebene E geschnitten, wobei idealer Weise deren Mittellängsachsen in der Ebene E liegen, jedoch sind geringfügige Abweichungen hiervon möglich, ohne dadurch den Druckverlust zu erhöhen.

Bei optimaler Auslegung des Gesamtsystemes liegt die strichpunktierte Linie L gemäß Figur 1 vollständig in der Ebene E.

Im Idealfall beträgt die Summe aller Ablenkungen zwischen dem Austritt aus der Turbine und dem Eintritt in den Frischluftstrom 360° Grad, d.h. das Abgas inklusive des rückgeführten Abgasteilstromes wird praktisch in einem Kreis im Uhrzeigersinn gemäß Figur 1 geführt.

Es wird nicht von dieser Erfindung abgewichen, wenn wie beispielsweise durch die erwähnten baulichen Gegebenheiten eine oder mehrere der Komponenten geringfügig windschief zur Ebene E verbaut sind, wodurch sich die Winkelsumme über 360° Grad erhöhen kann.

Im bekannten Stand der Technik werden beispielsweise durch u-förmig durchströmte AGR-Kühler oder bauraumbedingt winklige Katalysatoranordnungen oft Gesamtumlenkwinkel von deutlich größer als 720° Grad erreicht, wodurch die erheblichen Druckverluste im Stand der Technik erzeugt werden.

Es liegt ebenfalls im Rahmen der Erfindung, wenn das Überströmgehäuse 14 nicht entsprechend der Zeichnungsfiguren ausgebildet ist, sondern lediglich eine Umlenkstelle aufweist. Hierbei sind dann Katalysator 12 und Partikelfilter 16 zueinander in einem bestimmten Winkel angestellt, wobei jedoch die Summe aller Innenwinkel ebenfalls nicht deutlich von 360° Grad abweicht.

## Patentansprüche

1. Brennkraftmaschine mit einem Abgasturbolader und einem Abgasrückführsystem, enthaltend
a) einen Abgasturbolader (ATL) mit einer im Abgasweg angeordneten Turbine (10) des ATL und einem mit dieser gekoppelten, in einer Luftzuführung liegenden und um eine gemeinsame Achse (A) rotierenden Verdichter (30),
b) ein Abgasbehandlungssystem, welches im Abgasweg stromab der Turbine (10) angeordnet ist und zumindest eine Komponente (12, 16) zur Verringerung der Schadstoffemissionen im Abgas aufweist,
c) in dem Abgasrückführsystem eine Abgasrückführleitung (20), einen Abgasrückführ-Kühler (18) und ein Abgasrückführventil (40), wobei das Abgasrückführsystem den Abgasweg mit der Luftzuführung stromauf des Verdichters (30) verbindet,
**gekennzeichnet durch**,
- eine seitlich neben einer Längsseite der Brennkraftmaschine verlaufende Ebene (E), welche definiert ist **durch** die Achse (A) und einen hierzu beabstandeten Punkt (P), welcher in der vom rückgeführten Abgas durchströmten Eintrittsfläche (47) des AGR-Kühlers (18) liegt und
- **durch** eine weitestgehend umlenkungsfreie und gradlinige Durchströmung-der einzelnen Komponenten (12, 16) des Abgasbehandlungssystemes, wobei diese Komponenten (12, 16) von der Ebene (E) tangiert oder geschnitten werden und
- einen AGR-Kühler (18), welcher unmittelbar stromab einer Abzweigung (35) für das nicht zurückgeführte Abgas vom Abgasweg angeordnet ist, wobei sich die Abgasrückführieitung (20) bogenförmig derart vom AGR-Kühler (18) zur Luftzuführung erstreckt, dass das rückgeführte Abgas in einer zur Luftzuführung gleichgerichteten Strömungsrichtung (R) über eine Einleitstelle (22) zugeführt wird.

2. Brennkraftmaschine nach Anspruch 1, **dadurch gekennzeichnet, dass** die einzelne Komponente (12, 16) ein Katalysator (12) und/oder ein Partiketfilter (16) ist.

3. Brennkraftmaschine nach Anspruch 2, **dadurch gekennzeichnet, dass** der Katalysator (12) direkt an der Turbine (10) angeflanscht ist.

4. Brennkraftmaschine nach mindestens einem der vorhergehenden Ansprüche, **dadurch gekennzeichnet, dass** eine Winkeldifferenz der ein- und ausströmenden Abgase zu einer Durchströmungsrichtung des jeweiligen Bauteils kleiner oder gleich 90° ist.

5. Brennkraftmaschine nach Anspruch 3 oder 4, **dadurch gekennzeichnet, dass** der Katalysator (12) koaxial zur Achse (A) angeordnet ist.

6. Brennkraftmaschine nach mindestens einem der vorhergehenden Ansprüche 2 bis 5, **dadurch gekennzeichnet, dass** ein Überströmgehäuse (14) vorgesehen ist, welches den Katalysator (12) mit dem Partikelfilter (16) derart verbindet, dass ein Strömungsweg durch den Katalysator (12) und ein Strömungsweg durch den Partikelfilter (16) im Wesentlichen parallel zueinander angeordnet sind.

7. Brennkraftmaschine nach mindestens einem der vorhergehenden Ansprüche 2 bis 6, **dadurch gekennzeichnet, dass** der Katalysator (12) und der Partikelfilter (16) derart angeordnet und ausgebildet sind, dass zwischen diesen ein Abschnitt eines Abgaskrümmers (50) der Brennkraftmaschine angeordnet ist.

8. Brennkraftmaschine nach mindestens einem der vorhergehenden Ansprüche 2 bis 7, **dadurch gekennzeichnet, dass** die Abzweigung (35) Teil eines den Partikelfilter (16) aufnehmenden Gehäuse (37) ist und der AGR-Kühler (18) direkt an das Gehäuse (37) angeflanscht ist.

9. Brennkraftmaschine nach mindestens einem der vorhergehenden Ansprüche, **dadurch gekennzeichnet, dass** in der AGR-Strecke ein AGR-Filter (44) vorgesehen ist.

10. Brennkraftmaschine nach Anspruch 9, **dadurch gekennzeichnet, dass** das AGR-Filter (44) am Flansch zwischen Gehäuse (37) und AGR-Kühler (18) angeordnet ist.

11. Brennkraftmaschine nach Anspruch 1, **dadurch gekennzeichnet, dass** zwischen dem AGR-Kühler (18) und der Einleitstelle (22) ein AGR-Ventil (40) in der AGR-Strecke angeordnet ist.

12. Brennkraftmaschine nach Anspruch 11, **dadurch gekennzeichnet, dass** das AGR-Ventil (40) als Drosselklappe ausgebildet ist.

13. Brennkraftmaschine nach Anspruch 1, **dadurch gekennzeichnet, dass** eine Abgasleitung (36) zum Abführen von nicht rückgeführtem Abgas (38) abzweigt, wobei in der Abzweigung (35) eine Abgasstauklappe (34) angeordnet ist.

14. Brennkraftmaschine nach Ansprüchen 2 und 13, **dadurch gekennzeichnet; dass** die Abgasstauklappe (34) direkt an den Partikelfilter (16) angeflanscht oder in diesen integriert ist.

15. Brennkraftmaschine nach Ansprüchen 13 oder 14, **dadurch gekennzeichnet, dass** die Abgasstauklappe (34) als federbetätigte Klappe ausgebildet ist.

16. Brennkraftmaschine nach den Ansprüchen 11 bis 13, **dadurch gekennzeichnet, dass** ein gemeinsamer Steller vorgesehen ist, welcher sowohl das AGR-Ventil (40) als auch die Abgasstauklappe (34) und/oder eine Ansaug-Drosselklappe (42) betätigt, wobei diese in der Luftzuführung stromauf der Einleitstelle (22) angeordnet ist.

17. Brennkraftmaschine nach mindestens einem der vorhergehenden Ansprüche 2 bis 16, **dadurch gekennzeichnet, dass** zwischen dem Katalysator (12) und der Turbine (10), zwischen dem Katalysator (12) und dem Partikelfilter (16) und/oder zwischen dem Partikelfilter (16) und der Einleitstelle (22) Schiebesitze ausgebildet sind.

18. Brennkraftmaschine nach Anspruch 1, **dadurch gekennzeichnet, dass** ein Überströmgehäuse (14) vorgesehen ist, welches die Turbine (10) mit der Komponente (12, 16) zur Verringerung der Schadstoffemissionen im Abgas verbindet.

## Claims

1. Internal combustion engine having an exhaust-gas turbocharger and having an exhaust-gas recirculation system, comprising:
a) an exhaust-gas turbocharger (EGT) having a. turbine (10), which is arranged in the exhaust-gas path, of the EGT and having a compressor (30) which is coupled to said turbine and which is situated in an air supply line and which rotates about a common axis (A),
b) an exhaust-gas treatment system which is arranged in the exhaust-gas path downstream of the turbine (10) and which has at least one component (12, 16) for reducing the pollutant emissions in the exhaust gas,
c) in the exhaust-gas recirculation system, an exhaust-gas recirculation line (20), an exhaust-gas recirculation cooler (18) and an exhaust-gas recirculation valve (40), wherein the exhaust-gas recirculation system connects the exhaust-gas path to the air supply line upstream of the compressor (30),
**characterized by**
- a plane (E) which runs laterally adjacent to a longitudinal side of the internal combustion engine, said plane being defined by the axis (A) and by a point (P) which is spaced apart from said axis and which lies in the inlet area (47), through which the recirculated exhaust gas flows, of the EGR cooler (18), and
- an at least substantially diversion-free and rectilinear flow through the individual components (12, 16) of the exhaust-gas treatment system, wherein the plane (E) is tangent to or intersects said components (12, 16), and
- an EGR cooler (18) which is arranged directly downstream of a branch (35) from the exhaust-gas path for the non-recirculated exhaust-gas, wherein the exhaust-gas recirculation line (20) extends in arcuate form from the EGR cooler (18) to the air supply line in such a way that the recirculated exhaust gas is supplied via an introduction point (22) in a flow direction (R) oriented in the same direction as the air supply line.

2. Internal combustion engine according to Claim 1, **characterized in that** the individual component (12, 16) is a catalytic converter (12) and/or a particle filter (16).

3. Internal combustion engine according to Claim 2, **characterized in that** the catalytic converter (12) is flange-mounted directly on the turbine (10).

4. Internal combustion engine according to at least one of the preceding claims, **characterized in that** an angle difference of the inflowing and outflowing exhaust gases with respect to a throughflow direction of the respective component is less than or equal to 90°.

5. Internal combustion engine according to Claim 3 or 4, **characterized in that** the catalytic converter (12) is arranged coaxially with respect to the axis (A).

6. Internal combustion engine according to at least one of the preceding Claims 2 to 5, **characterized in that** a transfer flow housing (14) is provided which connects the catalytic converter (12) to the particle filter (16) in such a way that a flow path through the catalytic converter (12) and a flow path through the particle filter (16) are arranged substantially parallel to one another.

7. Internal combustion engine according to at least one of the preceding Claims 2 to 6, **characterized in that** the catalytic converter (12) and the particle filter (16) are arranged and designed such that a portion of an exhaust manifold (50) of the internal combustion engine is arranged between them.

8. Internal combustion engine according to at least one of the preceding Claims 2 to 7, **characterized in that** the branch (35) is part of a housing (37) which accommodates the particle filter (16), and the EGR cooler (18) is flange-mounted directly on the housing (37).

9. Internal combustion engine according to at least one of the preceding claims, **characterized in that** an EGR filter (44) is provided in the EGR path.

10. Internal combustion engine according to Claim 9, **characterized in that** the EGR filter (44) is arranged on the flange between the housing (37) and EGR cooler (18).

11. Internal combustion engine according to Claim 1, **characterized in that** an EGR valve (40) is arranged in the EGR path between the EGR cooler (18) and the introduction point (22).

12. Internal combustion engine according to Claim 11, **characterized in that** the EGR valve (40) is in the form of a throttle flap.

13. Internal combustion engine according to Claim 1, **characterized in that** an exhaust line (36) for discharging non-recirculated exhaust gas (38) branches off, wherein an exhaust-gas pressure flap (34) is arranged in the branch (35).

14. Internal combustion engine according to Claims 2 and 13, **characterized in that** the exhaust-gas pressure flap (34) is flange-mounted directly on, or is integrated in, the particle filter (16).

15. Internal combustion engine according to Claim 13 or 14, **characterized in that** the exhaust-gas pressure flap (34) is in the form of a spring-actuated flap.

16. Internal combustion engine according to Claims 11 to 13, **characterized in that** a common actuator is provided which actuates both the EGR valve (40) and also the exhaust-gas pressure flap (34) and/or an intake throttle flap (42), wherein the latter is arranged in the air supply line upstream of the introduction point (22).

17. Internal combustion engine according to at least one of the preceding Claims 2 to 16, **characterized in that** sliding fits are formed between the catalytic converter (12) and the turbine (10), between the catalytic converter (12) and the particle filter (16) and/or between the particle filter (16) and the introduction point (22).

18. Internal combustion engine according to Claim 1, **characterized in that** a transfer flow housing (14) is provided which connects the turbine (10) to the component (12, 16) for reducing the pollutant emissions in the exhaust gas.

## Revendications

1. Moteur à combustion interne doté d'une turbosoufflante à gaz d'échappement et d'un système de recyclage des gaz d'échappement, comprenant
(a) une turbosoufflante à gaz d'échappement (ATL) avec une turbine (10) du ATL disposée dans le chemin des gaz d'échappement et un compresseur (30) couplé à celle-ci, disposé dans une admission d'air et tournant autour d'un axe commun (A),
(b) un système de traitement des gaz d'échappement, qui est disposé dans le chemin des gaz d'échappement en aval de la turbine (10) et qui présente au moins un composant (12, 16)) destiné à réduire les émissions de substances polluantes dans les gaz d'échappement,
(c) dans le système de recyclage des gaz d'échappement, une conduite de recyclage des gaz d'échappement (20), un refroidisseur de recyclage des gaz d'échappement (18) et une soupape de recyclage des gaz d'échappement (40), dans lequel le système de recyclage des gaz d'échappement relie le chemin des gaz d'échappement à l'admission d'air en amont du compresseur (30),
**caractérisé par**
- un plan (E) s'étendant latéralement à côté d'un côté longitudinal du moteur à combustion interne, qui est défini par l'axe (A) et un point (P) espacé de celui-ci, qui est situé dans la face d'entrée (47) du refroidisseur AGR (18) parcourue par les gaz d'échappement recyclés et
- un écoulement rectiligne et très largement sans déviations à travers les composants individuels (12, 16) du système de traitement des gaz d'échappement, dans lequel ces composants (12, 16) sont touchés ou coupés par le plan (E) et
- un refroidisseur AGR (18), qui est disposé immédiatement en aval d'une dérivation (35) à partir du chemin des gaz d'échappement pour les gaz d'échappement non recyclés, dans lequel la conduite de recyclage des gaz d'échappement (20) s'étend en forme d'arc à partir du refroidisseur AGR (18) jusqu'à l'admission d'air, de telle manière que les gaz d'échappement recyclés soient fournis par un point d'introduction (22) dans une direction d'écoulement (R) de même orientation que l'admission d'air.

2. Moteur à combustion interne selon la revendication 1, **caractérisé en ce que** le composant individuel (12, 16) est un catalyseur (12) et/ou un filtre à particules (16).

3. Moteur à combustion interne selon la revendication 2, **caractérisé en ce que** le catalyseur (12) est raccordé directement à la turbine (10).

4. Moteur à combustion interne selon au moins l'une des revendications précédentes, **caractérisé en ce qu'**une différence angulaire des gaz d'échappement entrants et sortants par rapport à une direction d'écoulement à travers le composant respectif est inférieure ou égale à 90°.

5. Moteur à combustion interne selon la revendication 3 ou 4, **caractérisé en ce que** le catalyseur (12) est disposé coaxialement à l'axe (A).

6. Moteur à combustion interne selon au moins l'une des revendications précédentes 2 à 5, **caractérisé en ce qu'**il est prévu une enceinte de débordement (14), qui relie le catalyseur (12) au filtre à particules (16) de telle manière qu'un chemin d'écoulement à travers le catalyseur (12) et un chemin d'écoulement à travers le filtre à particules (16) soient sensiblement parallèles l'un à l'autre.

7. Moteur à combustion interne selon au moins l'une des revendications précédentes 2 à 6, **caractérisé en ce que** le catalyseur (12) et le filtre à particules (16) sont disposés et réalisés de telle manière qu'il se trouve entre ceux-ci une section d'un collecteur de gaz d'échappement (50) du moteur à combustion interne.

8. Moteur à combustion interne selon au moins l'une des revendications précédentes 2 à 7, **caractérisé en ce que** la dérivation (35) fait partie d'une enceinte (37) contenant le filtre à particules (16) et le refroidisseur AGR (18) est raccordé directement à l'enceinte (37).

9. Moteur à combustion interne selon au moins l'une des revendications précédentes, **caractérisé en ce qu'**il est prévu un filtre AGR (44) dans la zone AGR.

10. Moteur à combustion interne selon la revendication 9, **caractérisé en ce que** le filtre AGR (44) est disposé sur la bride entre l'enceinte (37) et le refroidisseur AGR (18).

11. Moteur à combustion interne selon la revendication 1, **caractérisé en ce qu'**une soupape AGR (40) est disposée dans la zone AGR entre le refroidisseur AGR (18) et le point d'introduction (22).

12. Moteur à combustion interne selon la revendication 11, **caractérisé en ce que** la soupape AGR (40) est réalisée sous la forme d'un clapet d'étranglement.

13. Moteur à combustion interne selon la revendication 1, **caractérisé en ce qu'**une conduite de gaz d'échappement (36) destinée à évacuer les gaz d'échappement non recyclés (38) est dérivée, dans lequel un clapet de retenue de gaz d'échappement (34) est disposé dans la dérivation (35).

14. Moteur à combustion interne selon les revendications 2 et 13, **caractérisé en ce que** le clapet de retenue de gaz d'échappement (34) est raccordé directement au filtre à particules (16) ou intégré dans celui-ci.

15. Moteur à combustion interne selon l'une des revendications 13 ou 14, **caractérisé en ce que** le clapet de retenue de gaz d'échappement (34) est réalisé sous la forme d'un clapet actionné par ressort.

16. Moteur à combustion interne selon l'une des revendications 11 à 13, **caractérisé en ce qu'**il est prévu un actionneur commun, qui actionne aussi bien la soupape AGR (40) que le clapet de retenue de gaz d'échappement (34) et/ou un clapet d'étranglement d'aspiration (42), dans lequel celui-ci est disposé dans l'admission d'air en amont du point d'introduction (22).

17. Moteur à combustion interne selon au moins l'une des revendications précédentes 2 à 16, **caractérisé en ce que** des sièges coulissants sont réalisés entre le catalyseur (12) et la turbine (10), entre le catalyseur (12) et le filtre à particules (16) et/ou entre le filtre à particules (16) et le point d'introduction (22).

18. Moteur à combustion interne selon la revendication 1, **caractérisé en ce qu'**il est prévu une enceinte de débordement (14), qui relie la turbine (10) au composant (12, 16) destiné à réduire les émissions de substances polluantes dans les gaz d'échappement.
